(19)

Europäisches
Patentamt
European
Patent Office
Office européen
des brevets

(11) **EP 2 924 597 A1**

(12) **EUROPEAN PATENT APPLICATION**

(43) Date of publication:
**30.09.2015 Bulletin 2015/40**

(51) Int Cl.:
***G06F 17/50*** *(2006.01)*

(21) Application number: **14162106.0**

(22) Date of filing: **27.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **North Thin Ply Technology Sarl**
**1305 Penthalaz-Cossonay (CH)**

(72) Inventors:
• **Ricard, Thomas**
**1070 Puidoux (CH)**

• **Maurin, Steven**
**1203 Genève (CH)**

(74) Representative: **Ganguillet, Cyril et al**
**ABREMA**
**Agence Brevets & Marques Ganguillet**
**Avenue du Théâtre 16**
**P.O. Box 5027**
**1002 Lausanne (CH)**

(54) **Computer-aided method of defining two-dimensional composite panels**

(57)    The present invention relates to a computer-aided method of defining two-dimensional composite panels (10) to be used in the manufacture of three-dimensional pieces (100), said panels being formed by staking and joining a plurality of plies (p) of composite materials, wherein said method permits to determine by calculation a drape-ability index DI based on the three-dimension shape of the piece to manufacture and/or of the physical parameters of the panels and to compare said drape-ability index DI with a threshold value $DI_{max}$, corresponding to the value for which the panels can not be draped correctly.

FIG. 6a

EP 2 924 597 A1

**Description**

FIELD OF THE INVENTION

The present invention relates to a computer-aided method of defining two-dimensional composite panels to be used in the manufacture of three-dimensional pieces, said panels being formed by staking and joining a plurality of plies of composite materials.

BACKGROUND OF THE INVENTION

In some engineering fields, the use of two-dimensional panels made from composite materials as raw product to make three-dimensional complex pieces tends to increase.

These panels are generally made from carbon fibre and consist of different plies of composite material laid in different orientations in order to obtain a laminate.

The manufacturing process of a three-dimensional piece usually involves a draping step, during which several two-dimensional composite panels are positioned into a three-dimensional mold, and a pressing and heating step, during which said panels are heated under pressure in the mold so as to cure the plies impregnated with resin of the panels. Each panel must be shaped so that the assembly of all panels exactly fills the mold. Furthermore, each panel must be shaped so as to prevent any excessive distortions, wrinkles or creases of the panel during the draping step. Thus, in the current manufacturing processes, defining the best appropriate shape for each panel is currently a labor intensive, time consuming process requiring many iterative attempts. To complete the draping of the panels into the mold, laminators have to stretch the panel, cut it in some area to create overlaps and avoid wrinkles. Therefore, the reproducibility of the draping process is not ensured due to this manual shaping of the panels, relying only on the skills of the laminator. Furthermore, this manual shaping of the panels limits the level of design creativity, reduces the production speed and affects the quality and the traceability.

The aim of the present invention is therefore to provide a method of defining two-dimensional composite panels, wherein the above mentioned drawbacks are avoided.

SUMMARY OF THE INVENTION

In this view, the present invention is concerned with a computer-aided method of defining two-dimensional composite panels to be used in the manufacture of three-dimensional pieces, said panels being formed by staking and joining a plurality of plies of composite materials, said method comprising the following steps:

a) providing, in a computer, a three-dimensional solid model of a piece to manufacture;
b) dividing said model into a plurality of separate regions, each region having a three-dimension shape defined by various geometrical parameters;
c) for each region, providing, in the computer, various physical parameters of a two-dimensional composite panel adapted to be deformed in a draping position, in which said panel substantially defines the same three-dimension shape as said region;
d) for each panel, determining by calculation a drape-ability index DI of said panel, said index DI being a function of the geometrical parameters of the region and/or of the physical parameters of the panel;
e) comparing the drape-ability index DI of each panel with a threshold value DI max;
f) if the drape-ability index DI of at least one panel is higher than or equal to the threshold value DI max, repeating the steps b) to e) but in modifying the three-dimension shape of at least one region in step b) and/or the physical parameters of at least one panel in step c);
g) if the drape-ability index DI of each panel is lower than the threshold value DI max, memorizing, in the computer, the geometrical parameters of the regions and the physical parameters of the panels.
Important features of the method are defined in dependent claims 2 to 5.

The present invention relates also to a computer program product according to claim 6 and to a method for manufacturing three-dimensional pieces according to claim 7.

Thus configured, the present invention permits to evaluate numerically the level of complexity of any three-dimension shape and to define the appropriate shape that two-dimensional composite panels should have to be draped accurately into a three-dimensional mold having said three-dimension shape. Such a computer-aided method permits to avoid the non-reproducible, time-consuming manual attempts of the current method. Furthermore, such a computer-aided method permits to memorize in a computer the best appropriate shape of each panel so that anyone can reproduce it afterwards.

BRIEF DESCRIPTION OF THE DRAWINGS

Other features and advantages of the present invention will appear more clearly from the detailed description of one embodiment of the invention which is presented solely by way of a non-restricted example and illustrated by the attached drawings in which:

Figure 1 is a perspective view of an airplane decomposed in various main parts;
Figures 2a, 2b and 2c are respectively perspective, front and side views of a tail part of the airplane of Figure 1;
Figure 3 shows a representative finite element model of the one region of the tail part illustrated in Figures 2a, 2b, 2c;
Figure 4a shows a three-dimensional solid model of the tail part illustrated in Figures 2a, 2b, 2c, said model being divided into a first set of five separate regions;
Figure 4b shows the same three-dimensional model as in Figure 4a, but said model being divided into a second set of five separate regions;
Figure 5 is a diagrammatic sectional view of a composite panel used for manufacturing one region of the model illustrated in Figures 6a or 6b;
Figure 6a shows a first assembly of five composite panels, each panel having the same three-dimension shape as one specific region of the model illustrated in Figure 4b;
Figure 6b shows a second assembly of five composite panels, each panel having the same three-dimension shape as one specific region of the model illustrated in Figure 4b.

DETAILED DESCRIPTION OF EMBODIMENTS OF THE INVENTION

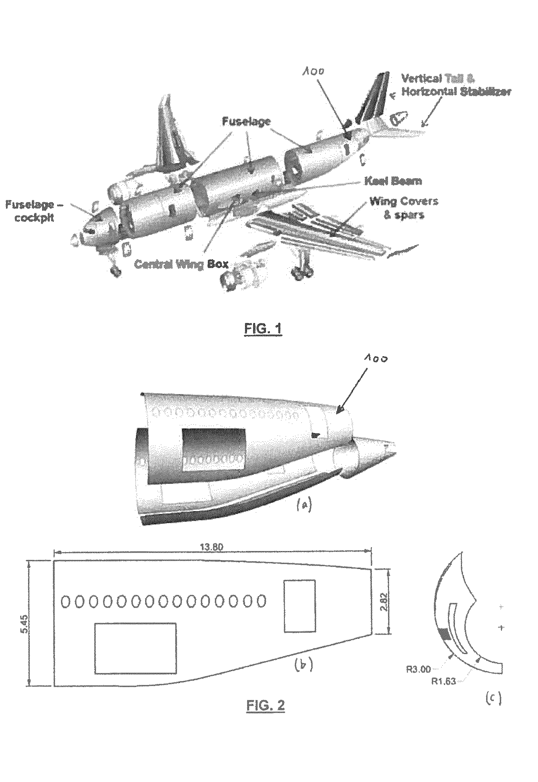

In reference to Figure 1, airplanes generally comprise several main components or parts that are made from composite material. In particular, the fuselage, the cockpit, the wings and the tail of airplanes are usually manufactured by assembling several composite panels, said panels being formed by stacking and joining a plurality of plies of composite materials. The manufacturing process according to the present invention permitting to obtain a specific tail part 100 of the airplane will be detailed in the following paragraphs.

As illustrated in Figures 2a, 2b, 2c, the tail part 100 defines a relatively complex three-dimension shape, including a substantially semi-cylindrical portion and a substantially semi-conical portion, said shape defining also several apertures corresponding to the windows and the doors of the airplane. To manufacture such a tail part, one initial step consists in providing a three-dimensional mold defining substantially the same three-dimension shape as the tail part 100. One intermediate step consists in positioning into said mold one or several two-dimensional composite panels so as to cover all external surfaces of the mold. One final step consists in pressing and heating said panels in the mold so as to cure the thermoplastic or thermosetting resin impregnated inside the panels. During the intermediate step, the two-dimensional composite panels are deformed so as to be draped around the mold. However, such a draping operation often involves several iterative attempts to find the best appropriate physical parameters of the panels permitting to easily drape them around the mold. Such physical parameters include in particular the two-dimension shape of the panels, the number of the plies forming the panels and the orientation of the fibers inside each ply. Depending on the physical parameters of the panels and the complexity of the three-dimension shape of the piece to manufacture, the draping operation is sometimes difficult or impossible to be done. Thus, in the intermediate step, the two-dimension shape or other physical parameters of one or several panels has to be modified before doing again such a draping operation.

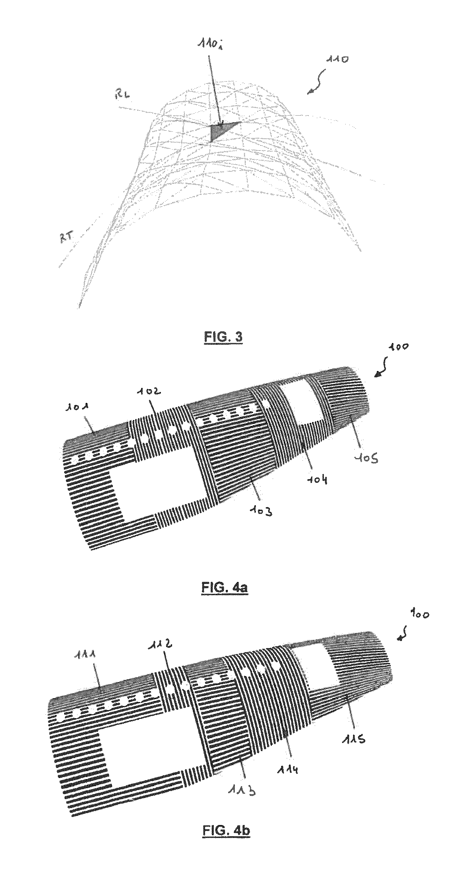

To optimize this manufacturing process, the present invention proposes a computer-aided method permitting to find rapidly and easily the best appropriate physical parameters of the panels so that only one attempt be necessary for draping the panels inside the mold. The first two steps of this method consists in providing, in a computer, a three-dimensional solid model of the piece of manufacture, i.e. the tail part 100 in this case, and in dividing said model into a plurality of separate regions. The techniques of constructing a solid model and dividing it into several separate regions are well established and described in the literature. Indeed, the current CAD (computer aided design) programs usually permits to create such 3D models and to perform a large number of numeric processing to the data corresponding to these 3D models. Figure 3 shows a three-dimensional solid model of a region 110 of the tail part 100. This region has been further divided into a plurality of elemental areas 110i, all areas 110i defining a representative finite element model of the region. Modeling by finite elements is nowadays an established technique. Such modeling allows numerically calculating the behavior of complex objects. Modeling by finite elements is based on a space division according to a grid made up of finite elements. The elemental areas 110i shown in Figure 3 are triangular. However, other geometric shapes may be used. Each elemental area 110i is defined by its surface $Area_{elt}$, and by its principal radii of the curvature $R_L$ and $R_T$ at the center of the elemental area 110i, respectively along and across a reference direction, which may be the axis of the piece to manufacture or the fiber direction of the panel. Said geometrical parameters define also the corresponding elemental portion of the composite panel, adapted to have the same three-dimension shape as said elemental area 110i in the draping position of the composite panel.

In reference to Figure 4a, a three-dimensional solid model of the tail part 100 is shown. This model has been divided into five separate regions 101, 102, 103, 104 and 105. For each region, the operator has defined the physical parameters of a panel adapted to be deformed in its draping position, in which it defines substantially the same three-dimension shape as said region, and has provided them to a computer program implementing the method of the present invention. Thereafter, said computer program has calculated a drape-ability index DI of each panel. Said drape-ability index DI reflects the level of difficulty for the panel to be deformed in its draping position. As explained in the following paragraphs, this drape-ability index DI is a function of the geometrical parameters of the region and/or of the physical parameters of the panel. Then, for each panel, the computer program compares its drape-ability index DI with a threshold value $DI_{max}$, corresponding to the value for which the panel can not be deformed in its draping position. If the drape-ability indexes DI of all panels are lower than $DI_{max}$, the computer program memorizes the geometrical parameters of the regions and the physical parameters of the panels. These memorized parameters will thus be used during the manufacturing process of the tail part for manufacturing the set of composite panels that are positioned into a three-dimension mold having the same shape as the piece to manufacture. However, if the drape-ability index DI of at least one panel is higher than or equal to $DI_{max}$, the computer program will ask to the operator to modify the geometrical parameters of one or more regions and/or the physical parameters of one or more panels until the drape-ability indexes DI of all panels are lower than $DI_{max}$. $DI_{max}$ is variable according to the fibers and the resin used for manufacturing the panels. To calculate DI, the computer program may firstly determine by calculation the elemental drape-ability indexes $DI_{elt}$ of a plurality of elemental portions of the panel, each of said elemental portions corresponding to one elemental area 110i of the region 100, said elemental drape-ability indexes $DI_{elt}$ being a function of the geometrical parameters of said elemental area 110i and/or of the physical parameters of the corresponding elemental portion of the panel. The mathematical formula used by the computer program for calculating $DI_{elt}$ is variable according to the level of complexity of the composite panels.

In particular, for panels having an isotropic structure, the mathematic formula (F) used by the computer program for calculating $DI_{elt}$ will be:

$$DI_{elt} = (Area_{elt} * 1/R_L * 1/R_T)/4\pi \quad (F)$$

wherein:

- $Area_{elt}$ corresponds to the surface of the elemental portion of the panel, which corresponds to one elemental area 110i in the draping position of the panel,
- $R_L$ and $R_T$ correspond to the principal radii of the curvature of said elemental portion.

Thus, in the example illustrated in Figure 4a, and considering that each panel used for forming the regions 101 to 105 is isotropic, the computer program firstly divides each panel into a plurality of elemental portions (as previously defined), then calculates the elemental drape-ability indexes $DI_{elt}$ of said elemental portions by using the formula (F), and finally calculates the drape-ability index DI of each panel by summing said elemental drape-ability indexes $DI_{elt}$. Thus, for the panels used for forming the regions 101 to 105, the drape-ability indexes DI calculated by the computer program are respectively 3, 15, 10, 8 and 4. The threshold value $DI_{max}$ for this type of panel being equal to 10, the computer program determines that two panels, i.e. the second one and the third one, can not be draped correctly. Therefore, further numeric attempts must be done to render said indexes DI lower than the threshold value $DI_{max}$.

Accordingly, in the example illustrated in Figure 4b, the three-dimensional solid model of the tail part 100 has been divided into five other regions 111, 112, 113, 114 and 115, the shapes and the positions of said regions being different from those of the regions 101 to 105. Thus, for the panels used for forming said regions 111 to 115, the drape-ability indexes DI calculated by the computer program are respectively 8, 8, 7, 8 and 8. Therefore, no further numeric attempt is necessary and the computer program can memorize the geometrical parameters of the regions 111 to 115 and the physical parameters of the panels used for forming said regions 111 to 115.

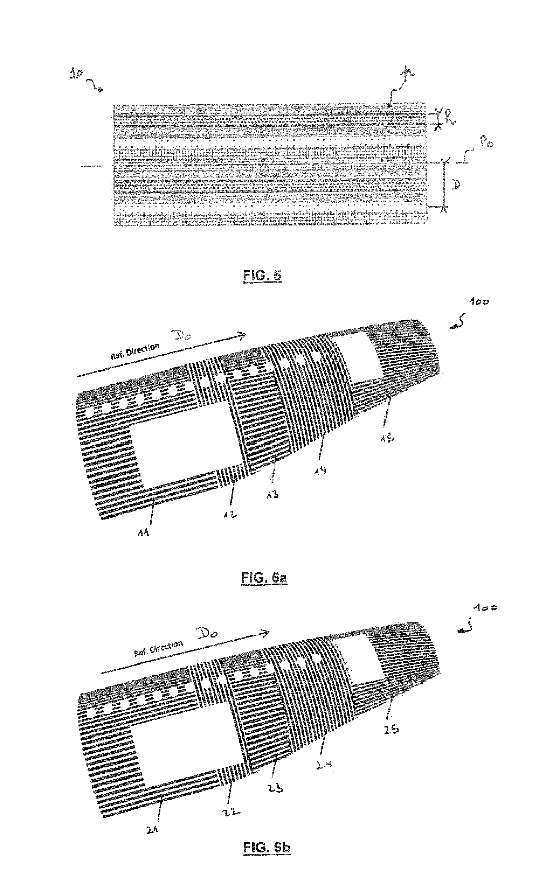

However, the formula (F) is not adapted for panels having an anisotropic structure or may be considered as not sufficiently precise for a specific piece to manufacture. In particular, the formula (F) is not adapted for calculating the drape-ability index DI of the orthotropic panel 10, illustrated in Figure 5, which comprises several plies p stacked across its thickness, each ply having its own fiber orientation. This orientation is generally chosen among a number of classical values, for example -60°, -45°, 0, +45°, +60°, +90°, the value 0 corresponding the fiber orientation of one specific ply of the panel, but can also be set at any other arbitrary value, for example +17°. Each ply p of the panel 10 is also defined by two main parameters, i.e. its thickness h and the average distance D between the ply and the plane of symmetry Po, which virtually divides the panel 10 in two halves having the same volume.

In this case, for calculating the elemental drape-ability index $DI_{elt}$ of each elemental portion (as previously defined) of the panel 10, the computer program will sum the elemental drape-ability indexes $DI_{ply}$ of the corresponding elemental portions of the plurality of plies p, said corresponding elemental portions corresponding to the same elemental area of the region in the draping position of the panel 10. The mathematical formula (F') used by the computer program for calculating $DI_{ply}$ will be:

$$DI_{ply} = [(E_L/R_L) + (E_T/R_T)] * I_{ply} / Area_{elt} \quad (F')$$

wherein:

- $Area_{elt}$ corresponds to the surface of the elemental portion of the ply, which corresponds to one elemental area of the panel in the draping position of the panel,
- $R_L$ and $R_T$ correspond to the radii of the curvature of said elemental portion in the draping position of the panel, respectively along and across the fiber direction of the ply,
- $E_L$ and $E_T$ correspond to the elastic moduli of the ply, respectively along and across the fiber direction of the ply,
- $I_{ply}$ is calculated by using the following formula:

$$I_{ply} = h^3/12 + h*D^2,$$

wherein:

- h corresponds to the thickness of the ply,
- D corresponds to the average distance between the ply and the plane of symmetry Po.

Thus, in the example illustrated in Figure 6a, the three-dimensional solid model of the tail part 100 has been divided into the same five regions 111 to 115 as in Figure 4b. The panels 11 to 15 used for forming the regions 111 to 115 have an orthotropic structure, comprising 12 plies with the following fiber directions:

- the fibers of the first, fifth and ninth plies are oriented along the reference direction Do shown in Figure 6a,
- the fibers of the second, sixth and tenth plies are perpendicular to the direction Do,
- the fibers of the third, seventh and eleventh plies define an angle of -45° with the direction Do,
- the fibers of the fourth, eighth and twelfth plies define an angle of +45° with the direction Do.

Each ply is also defined by an elastic modulus $E_L$ equal to 135000 MPa, an elastic modulus $E_T$ equal to 88000 Mpa and a thickness equal to 0.1 mm.

Once said data provided to the computer program, the computer program firstly divides each panel into a plurality of elemental portions (as previously defined), then calculates the elemental drape-ability indexes $DI_{ply}$ of the corresponding elemental portions of each ply by using the formula (F'), then calculates the drape-ability index $DI_{elt}$ of each elemental portion of each panel by summing said elemental drape-ability indexes $DI_{ply}$ and finally calculates the drape-ability index DI of each panel by summing said elemental drape-ability indexes $DI_{elt}$. Thus, for the panels 11 to 15, the drape-ability indexes DI calculated by the computer program are respectively 22.4, 22.4, 19.6, 22.4 and 22.4. The threshold value $DI_{max}$ for this type of panel being equal to 10, the computer program determines that all panels 11 to 15 can not be draped correctly. Therefore, further numeric attempts must be done to render said indexes DI lower than the threshold value $DI_{max}$.

Accordingly, in the example illustrated in Figure 6b, the physical parameters of the panels have been modified. In particular, the panels 21 to 25 used for forming the regions 111 to 115 comprise 12 plies with the following fiber directions:

- the fibers of the first, fourth, fifth, eighth, ninth and twelfth plies are oriented along the reference direction Do shown in Figure 6b,
- the fibers of the second, sixth and tenth plies define an angle of +60° with the direction Do,
- the fibers of the third, seventh and eleventh plies define an angle of -60° with the direction Do.

Thus, for the panels 21 to 25, the drape-ability indexes DI calculated by the computer program are respectively 9.6, 9.6, 8.4, 9.6 and 9.6. The threshold value $DI_{max}$ for this type of panel being equal to 10, no further numeric attempt is necessary and the computer program can memorize the geometrical parameters of the regions 111 to 115 and the physical parameters of the panels 21 to 25.

In a preferred embodiment, the computer program may be configured so as to provide automatically the best appropriate geometrical parameters of the regions and physical parameters of the panels so as to optimize the computer-aided method of the present invention.

**Claims**

1. A computer-aided method of defining two-dimensional composite panels (10) to be used in the manufacture of three-dimensional pieces (100), said panels (10) being formed by staking and joining a plurality of plies (p) of composite materials, said method comprising the following steps:

   a) providing, in a computer, a three-dimensional solid model of a piece to manufacture;
   b) dividing said model into a plurality of separate regions (111, 112, 113, 114, 115), each region having a three-dimension shape defined by various geometrical parameters;
   c) for each region, providing, in the computer, various physical parameters of a two-dimensional composite panel (11, 12, 13, 14, 15) adapted to be deformed in a draping position, in which said panel substantially defines the same three-dimension shape as said region;
   d) for each panel, determining by calculation a drape-ability index DI of said panel, said index DI being a function of the geometrical parameters of the region and/or of the physical parameters of the panel;
   e) comparing the drape-ability index DI of each panel with a threshold value DI max;
   f) if the drape-ability index DI of at least one panel is higher than or equal to the threshold value DI max, repeating the steps b) to e) but in modifying the three-dimension shape of at least one region in step b) and/or the physical parameters of at least one panel in step c);
   g) if the drape-ability index DI of each panel is lower than the threshold value DI max, memorizing, in the computer, the geometrical parameters of the regions and the physical parameters of the panels.

2. The method according to claim 1, wherein, in step b), each region (110) is further divided into a plurality of elemental areas (110i) of a representative finite element model of the region, each elemental area having its own three-dimension shape defined by various geometrical parameters, wherein, in step d), the drape-ability index DI of each panel is calculated by summing the elemental drape-ability indexes $DI_{elt}$ of a plurality of elemental portions of the panel, each elemental portion being defined by its own physical parameters and having, in the draping position of the panel, the same three-dimension shape as one corresponding elemental area of the region, and wherein each index $DI_{elt}$ is a function of the geometrical parameters of one elemental area of the region and/or of the physical parameters of the corresponding elemental portion of the panel.

3. The method according to claim 2, wherein the elemental drape-ability index $DI_{elt}$ of each elemental portion of the panel is calculated by using the following formula:

$$DI_{elt} = (Area_{elt} * 1/R_L * 1/R_T)/4\pi \, ,$$

   wherein:

   - $Area_{elt}$ corresponds to the surface of the elemental portion in the draping position of the panel,
   - $R_L$ and $R_T$ correspond to the principal radii of the curvature of the elemental portion in the draping position of the panel.

4. The method according to claim 2, wherein the elemental drape-ability index $DI_{elt}$ of each elemental portion of the panel is calculated by summing the elemental drape-ability indexes $DI_{ply}$ of the corresponding elemental portions of the plurality of plies forming the panel, $DI_{ply}$ being calculated by using the following formula:

$$DI_{ply} = [(E_L/R_L) + (E_T/R_T)] * I_{ply} / Area_{elt} \, ,$$

   wherein:

- Area$_{elt}$ corresponds to the surface of the elemental portion of the ply, which corresponds to one elemental area of the panel in the draping position of the panel,
- R$_L$ and R$_T$ correspond to the radii of the curvature of said elemental portion in the draping position of the panel, respectively along and across the fiber direction of the ply,
- E$_L$ and E$_T$ correspond to the elastic moduli of the ply, respectively along and across the fiber direction of the ply,
- I$_{ply}$ is calculated by using the following formula:

$$I_{ply} = h^3/12 + h*D^2 \text{ ,}$$

wherein:

- h corresponds to the thickness of the ply,
- D corresponds to the average distance between the ply and the plane of symmetry of the panel.

5. The method according to any one of claims 1 to 4, wherein steps b) to g) are automatically done by a computer program running on the computer.

6. A computer program product comprising a set of instructions adapted to implement the method according to any one of claims 1 to 5, when said program is run on a computer.

7. A method for manufacturing three-dimensional pieces, comprising the following steps:

- providing a three-dimensional mold defining a three-dimension shape, said shape corresponding to the three-dimension shape of the piece to manufacture;
- manufacturing one or several two-dimensional composite panels defined by the method according to any one of claims 1 to 5;
- positioning said panels into said mold;
- pressing and heating said panels into said mold.

Vertical Tail & Horizontal Stabilizer

Fuselage

100

Keel Beam

Fuselage – cockpit

Wing Covers & spars

Central Wing Box

FIG. 1

100

(a)

13.80

5.45

2.82

R3.00

R1.63

(b)

(c)

FIG. 2

8

FIG. 3

FIG. 4a

FIG. 4b

FIG. 5

FIG. 6a

FIG. 6b

Europäisches
Patentamt

European
Patent Office

Office européen
des brevets

# EUROPEAN SEARCH REPORT

Application Number

EP 14 16 2106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FR 2 947 477 A1 (AIRBUS OPERATIONS SAS [FR]) 7 January 2011 (2011-01-07) * the whole document * | 1-7 | INV. G06F17/50 |
| A | DIANZI LIU ET AL: "Optimization of Blended Composite Wing Panels Using Smeared Stiffness Technique and Lamination Parameters", 51ST AIAA/ASME/ASCE/AHS/ASC STRUCTURES, STRUCTURAL DYNAMICS, AND MATERIALS CONFERENCE, 12 April 2010 (2010-04-12), XP055141966, Reston, Virigina DOI: 10.2514/6.2010-3079 ISBN: 978-1-60-086961-7 * the whole document * | 1-7 | |
| A | ABEL CHEROUAT ET AL: "Numerical Tools for Composite Woven Fabric Preforming", ADVANCES IN MATERIALS SCIENCE AND ENGINEERING, vol. 50, no. 4, 2013, pages 561-18, XP055141967, ISSN: 1687-8434, DOI: 10.1007/BF01379008 * the whole document * | 1-7 | |

TECHNICAL FIELDS
SEARCHED (IPC)

G06F

The present search report has been drawn up for all claims

| Place of search | Date of completion of the search | Examiner |
|---|---|---|
| Munich | 23 September 2014 | Picallo Gonzalez, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 2106

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2014

| Patent document cited in search report | Publication date | Patent family member(s) | Publication date |
|---|---|---|---|
| FR 2947477 A1 | 07-01-2011 | NONE | |

EPO FORM P0459

For more details about this annex : see Official Journal of the European Patent Office, No. 12/82